# EUROPEAN PATENT SPECIFICATION

(11) **EP 3 489 012 B1**
(45) Date of publication and mention of the grant of the patent: **05.08.2020**
(21) Application number: 17830801.1
(22) Date of filing: 28.06.2017
(51) Int. Cl.: B32B 27/28, B32B 27/30, B65D 65/40, B32B 7/02, B32B 7/12, B32B 27/32, B32B 27/08, B32B 27/16, B32B 27/20, B32B 27/34, B32B 27/36, B32B 1/08

(54) **HEAT-SHRINKABLE MULTILAYER FILM**
WÄRMESCHRUMPFBARE MEHRSCHICHTFOLIE
FILM MULTICOUCHE THERMORÉTRACTABLE

(30) Priority: 20.07.2016 JP 2016142648
(43) Date of publication of application: 29.05.2019
(73) Proprietor: Kureha Corporation, Chuo-ku Tokyo 103-8552 (JP)
(72) Inventor: KITADA, Ichiro, Tokyo 103-8552 (JP); ITOH, Tadayoshi, Tokyo 103-8552 (JP); NAMBU, Shota, Tokyo 103-8552 (JP)
(74) Representative: BRP Renaud & Partner mbB Rechtsanwälte Patentanwälte Steuerberater
(86) International application number: PCT/JP2017/023816
(87) International publication number: WO 2018/016281

(56) References cited:
- EP-A1- 0 319 732
- WO-A1-2012/085240
- WO-A1-2013/121874
- WO-A1-2013/121874
- JP-A- H0 326 542
- JP-A- H01 168 229
- JP-A- H08 239 493
- JP-A- 2003 523 290

## Description

### Technical Field

The present invention relates to a heat-shrinkable multilayer film that is used in food packaging.

### Background Art

In the related art, heat-shrinkable multilayer bags, pouches, and other packaging materials have been used in food packaging. For cases in which the heat-shrinkable multilayer film used in these packaging materials is a tubular heat-shrinkable multilayer film obtained by extruding a resin laminate from a tubular die into a film shape, and biaxially stretching the extruded laminate by an inflation method, the tubular heat-shrinkable multilayer film being folded, (1) the tubular heat-shrinkable multilayer film is subjected to primary sealing by a method such as heat sealing or impulse sealing in a direction perpendicular to an extrusion direction in which the resin laminate is extruded into a film shape, and a bottom seal portion of a bag is thereby formed, and the film is cut in a direction perpendicular to the extrusion direction at the position of the bottom seal portion and at a position differing in the extrusion direction to form an opening portion of the bag to thereby form a typical bottom sealed bag or other such packaging material, or (2) the tubular heat-shrinkable multilayer film is subjected to primary sealing by a method such as heat sealing or impulse sealing in a direction perpendicular to the extrusion direction to thereby form a side seal portion (bag side surface) of the bag, and the film is cut in a direction parallel to the extrusion direction to form an opening portion of the bag and thereby form a side sealed bag or other such packaging material. Moreover, for cases in which the heat-shrinkable multilayer film is a flat film that has been extruded from a T-die and stretched by a tenter method, the seal surface of the flat film is either oriented to the inside and folded, or two flat films are stacked with the seal surfaces oriented so as to be mutually facing, and the films are subjected to primary sealing along a shape of a pouch, and cut to thereby form a typical pouch or other such packaging material.

Heat-shrinkable packaging materials are also used to obtain food packaging bodies by filling the packaging material with contents, implementing vacuum packaging, and passing the vacuum packaged product through a hot water shower or immersing the vacuum packaged product in hot water to thereby heat shrink the packaging material.

Patent Document 1, for example, describes, as a heat-shrinkable multilayer film, a packaging laminate made from at least three layers including an inner surface layer that contacts a filing in the heat-shrinkable multilayer film, an intermediate layer adjacent thereto, and an outer surface layer, wherein the inner surface layer includes an inorganic lubricant and an organic lubricant, the intermediate layer includes an organic lubricant, and the inner surface layer is selected from single site catalyst-based polyethylenes, LLDPE, and the like.

Patent Document 2 describes a heat-shrinkable multilayer film which when filled with contents includes: an outer surface layer made from a heat-resistant thermoplastic resin; an intermediate layer made from a polyamide-based resin; and an inner surface layer made from an ethylene-based copolymer; and in which an adhesion strength between the inner surface layers after treatment with 80°C hot water is from 0.1 to 3.5 N/15 mm.

Patent Document 3 describes, as a co-extruded multilayer film for a lid material of a skin pack, a film including an ethylene-vinyl acetate copolymer or the like at an innermost layer.

WO2013/121874 A1 relates to a heat-shrinkable multilayer film comprising a surface layer, an intermediate layer, a barrier layer made of polyvinylidene chloride and a sealant layer.

### Citation List

### Patent Literature

Patent Document 1: WO 00/47406 (published 17 August 2000)
Patent Document 2: WO 2014/178379 (published 06 November 2014)
Patent Document 3: JP 2015-174678 A (published 05 October 2015)

### Summary of Invention

### Technical Problem

However, the development of a heat-shrinkable multilayer film for which the primary seal portion, which is the portion that has been subjected to primary sealing, does not peel at high temperatures such as when immersing the heat-shrinkable multilayer film in hot water is desired. In other words, a demand exists for a heat-shrinkable multilayer film that exhibits a high seal strength of the primary seal portion at high temperatures.

A demand also exists for a heat-shrinkable multilayer film that exhibits a high area shrinkage rate at high temperatures.

However, Patent Documents 1 to 3 do not describe that the heat-shrinkable multilayer films are provided with a high seal strength so that the primary seal portion does not peel at high temperatures.

Furthermore, the present inventors conducted examinations, and as a result, found that the heat-shrinkable multilayer film described in Patent Document 2 does not exhibit a sufficient area shrinkage rate at high temperatures. In addition, Patent Document 3 does not describe that the film has a high area shrinkage rate at high temperatures.

The present invention takes into account the above-mentioned problems, and an object of the present invention is to provide a heat-shrinkable multilayer film that exhibits a high seal strength of the primary seal portion and a high area shrinkage rate at high temperatures.

### Solution to Problem

In order to solve the above-mentioned problems, the present inventors conducted diligent examinations, and as a result, discovered that by setting the content of vinyl acetate monomer units in the ethylene-vinyl acetate copolymer to a specific percentage, and providing a barrier layer that contains a specific substance, a seal strength is exhibited at which the primary seal portion does not peel even at high temperatures such as when immersing the heat-shrinkable multilayer film in hot water of a high temperature, and a high area shrinkage rate at high temperatures is also achieved, and the inventors thereby arrived at the present invention.

A heat-shrinkable multilayer film according to the present invention includes an inner surface layer that contacts a filling, a barrier layer and an intermediate layer between the inner surface layer and the barrier layer; wherein a thickness of the intermediate layer is not more than 1.4 times a thickness of the inner surface layer; the inner surface layer contains an ethylene-vinyl acetate copolymer; the barrier layer contains a vinylidene chloride-based resin; and the content of vinyl-acetate monomer units in the ethylene-vinyl acetate copolymer is from 7 wt.% to 14 wt.%.

### Advantageous Effects of Invention

The heat-shrinkable multilayer film according to the present invention exhibits an effect of having, at high temperatures, a high seal strength of a primary seal portion and a high area shrinkage rate.

### Brief Description of the Drawings

FIG. 1 is an image schematically illustrating a heat shrunk packaging body in which raw meat is packaged with a heat-shrinkable multilayer film according to an embodiment of the present invention.
FIG. 2 is an image schematically illustrating a heat shrunk packaging body in which processed meat is packaged with a film that includes an ethylene-vinyl alcohol copolymer as a barrier layer.

### Description of Embodiments

Hereinafter, an embodiment of the present invention will be described in detail.

### Heat-shrinkable multilayer film

A heat-shrinkable multilayer film according to the present embodiment includes an inner surface layer that contacts a filling, a barrier layer and an intermediate layer between the inner surface layer and the barrier layer; wherein a thickness of the intermediate layer being not more than 1.4 times a thickness of the inner surface layer; the inner surface layer contains an ethylene-vinyl acetate copolymer; the barrier layer contains a vinylidene chloride-based resin; and the content of vinyl-acetate monomer units in the ethylene-vinyl acetate copolymer is from 7 wt.% to 14 wt.%. Such features increase the seal strength of the primary seal portion and the area shrinkage rate at high temperatures. Note that primary sealing as used herein refers to the matter of sealing one end of a heat-shrinkable multilayer film that has not being thermally fused, and the primary seal portion refers to a portion that has been primarily sealed.

Here, an example of the method for sealing is a method in which overlapped portions of a heat-shrinkable multilayer film are thermally fused through heat sealing, impulse sealing, or the like.

In addition, examples of packaging materials that are obtained through primary sealing of the above-described heat-shrinkable multilayer film include bottom sealed bags, side sealed bags and the like.

A bottom sealed bag is obtained by extruding a resin laminate into a film shape from a tubular die, biaxially stretching using an inflation method to obtain a tubular heat-shrinkable multilayer film, and subsequently folding the obtained tubular heat-shrinkable multilayer film, and subjecting the tubular heat-shrinkable multilayer film to primary sealing through a method such as heat sealing or impulse sealing in a direction perpendicular to an extrusion direction in which the resin laminate was extruded into a film shape to thereby form a bottom seal portion of a bag, and then cutting the film in a direction perpendicular to the extrusion direction at the position of the bottom seal portion, and at a position differing in the extrusion direction to thereby form an opening portion of the bag.

A side sealed bag is obtained by subjecting the above-described tubular heat-shrinkable multilayer film to primary sealing through a method such as heat sealing or impulse sealing in a direction perpendicular to the extrusion direction to thereby form a side seal portion (bag side surface) of a bag, and cutting the film in a direction parallel to the extrusion direction to form an opening portion of the bag.

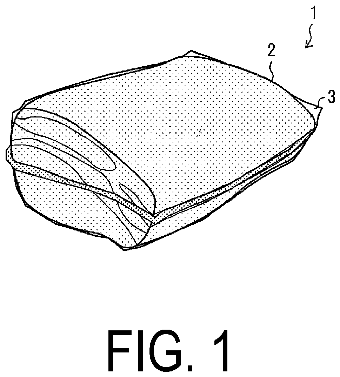

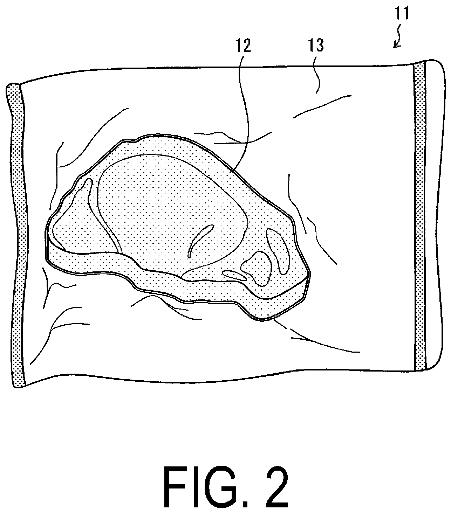

Hereinafter, suitable usage aspects of the heat-shrinkable multilayer film according to the present embodiment are specifically described using FIGS. 1 and 2.

FIG. 1 is an image schematically illustrating a heat shrunk packaging body 1 in which raw meat (filling) 2 is packaged with almost no excess portion (hereinafter "selvage portion") 3 of the film remaining.

FIG. 2 is an image schematically illustrating a heat shrunk packaging body 11 in which processed meat 12 such as roast pork is packaged with a large excess portion (selvage portion) 13 of the film remaining.

As illustrated in FIG. 1, almost no selvage portion 3 of the heat shrunk packaging body 1 in which the raw meat 2 is packaged remains other than at the end part of the raw meat 2. The heat-shrinkable film used in this type of packaging body 1 is used in a form such that the heat-shrinkable film thermally shrinks along the contour of the raw meat 2. In other words, the heat-shrinkable film that is used in the packaging body 1 of FIG. 1 is required to have a high area shrinkage rate at high temperatures.

On the other hand, with the heat shrunk packaging body 11 in which the processed meat 12 is packaged as illustrated in FIG. 2, the selvage portion 13 is larger compared to the selvage portion 3 of the packaging body 1 of FIG. 1. In addition, the degree of closeness of the film to the surface of the filling is not required to be of the extent of that of a raw meat packaging body 1 like the packaging body 1 illustrated in FIG. 1. In other words, the film used in a packaging form like that illustrated in FIG. 2 is not required to have as high an extent of an area shrinkage rate at high temperatures as that of the heat-shrinkable film used in the packaging body 1 illustrated in FIG. 1. Therefore, examples of films that can be used in the packaging body 11 illustrated in FIG. 2 include films that contain an ethylene-vinyl alcohol copolymer (EVOH) in the barrier layer like the films described in Patent Documents 2 and 3.

Here, the heat-shrinkable multilayer film according to the present embodiment contains a vinylidene chloride-based resin in the barrier layer, and exhibits a high area shrinkage rate at high temperatures in comparison to films that contain EVOH in the barrier layer. Therefore, the heat-shrinkable multilayer film according to the present embodiment is suitably used as a film that forms a packaging body 1 like that illustrated in FIG. 1.

Here, in the present embodiment, the matter of having seal strength of a level at which the primary seal portion does not peel indicates specifically that the maximum point strength and maximum point energy of the primary seal portion that has been naturally shrunk in 80°C hot water are within a preferable range. Furthermore, the maximum point strength as used herein means the maximum load (N/15 mm) determined by applying a tensile load to a primary seal portion, which has been naturally shrunk in 80°C hot water, until the seal portion ruptures. In addition, the maximum point energy means the energy (J) applied to the primary seal portion until the maximum point strength is reached.

As the maximum point strength, a range from 2.0 N/15 mm to 5.0 N/15 mm is preferable, from 2.0 N/15 mm to 4.5 N/15 mm is more preferable, and from 2.1 N/15 mm to 4.0 N/15 mm is even more preferable.

As the maximum point energy, a range from 0.013 J to 0.20 J is preferable, from 0.015 J to 0.18 J is more preferable, and from 0.017 J to 0.16 J is even more preferable.

Note that the seal strength of the primary seal portion at high temperatures can be ascertained by, for example, filling with contents a packing material obtained by primary sealing a heat-shrinkable multilayer film, and then vacuum sealing to obtain a sample for fill testing, immersing the sample in a hot water tank heated to 80°C for 3 seconds, followed by immersing the sample in a 2°C cold water tank for 10 seconds, and subsequently checking for the presence of any tearing in the primary seal portion. In this case, for example, the seal strength of the primary seal portion can be considered to be sufficiently high in a case where three samples are prepared, and none of the bag samples tear at the primary seal portion when the test is performed three times.

Furthermore, when the heat-shrinkable multilayer film according to the present embodiment is immersed for 10 seconds in 80°C hot water, the area shrinkage rate is preferably from 55% to 90%, more preferably from 60% to 90%, and even more preferably from 61% to 88%. Note that the area shrinkage rate herein indicates a value obtained by the equation [1 - ((length in the machine direction (MD) of the heat-shrinkable multilayer film after shrinkage) × (length in the transverse direction (TD) after shrinkage))/((length in the MD before shrinkage) × (length in the TD before shrinkage))] × 100.

When the area shrinkage rate of the heat-shrinkable multilayer film when immersing heat-shrinkable multilayer film for 10 seconds in 80°C hot water is 55% or greater, the inner surface layer of the heat-shrinkable multilayer film is made to closely contact the filling that is filled in the heat-shrinkable multilayer film, and thereby the amount of outward flow of drips from a packaging body of meat can be reduced. In addition, when the area shrinkage rate is 90% or less, the heat-shrinkable multilayer film does not excessively shrink, and the outward flow of drips due to compressing action that tightens the filling is not promoted. Therefore, the heat-shrinkable multilayer film and the filling can be made to be in close contact as much as possible without compressing the filling, and the amount of outward flow of drips can be reduced.

Furthermore, the heat-shrinkable multilayer film according to the present embodiment also excels in external appearance after being immersed in 80°C hot water and shrunk. The matter of excelling in external appearance means that, for example, the haze (cloudiness of the film) after shrinking in 80°C hot water is low. This means that transparency is improved as the haze value becomes smaller, and transparency is poorer as the haze value becomes larger.

The haze of the heat-shrinkable multilayer film after shrinking is preferably 35% or less, more preferably 33% or less, and even more preferably 30% or less.

Here, as the method for measuring the haze of the heat-shrinkable multilayer film after shrinking, the heat-shrinkable multilayer film can be immersed for 10 seconds in 80°C hot water and then removed and immediately cooled in water at room temperature, after which the haze of the obtained shrunk film can be measured using a haze meter (Haze Meter NDH2000, available from Nippon Denshoku Industries Co., Ltd.) in conformance with the method described in JIS K 7136:2000 "Plastics: Determination of Haze for Transparent Materials".

Note that the external appearance of a packaging body for which contents are filled into the heat-shrinkable multilayer film according to the present embodiment can be measured by visually checking details such as whether the filling is in close contact with the heat-shrinkable multilayer film.

The heat-shrinkable multilayer film according to the present embodiment also exhibits minimal haze and excellent external appearance before shrinkage.

The haze of the heat-shrinkable multilayer film before shrinking is preferably 15% or less, more preferably 10% or less, and even more preferably 8% or less.

Here, as the method for measuring the haze of the heat-shrinkable multilayer film before shrinking, similar to the description above, the haze of the heat-shrinkable multilayer film before shrinkage can be measured at room temperature using a haze meter (Haze Meter NDH2000, available from Nippon Denshoku Industries Co., Ltd.) in conformance with the method described in JIS K 7136:2000 "Plastics: Determination of Haze for Transparent Materials".

In addition, the heat-shrinkable multilayer film before shrinkage also excels in cold-resistant seal strength. The extent at which the film excels in cold-resistant seal strength can be ascertained, for example, by performing a dropping ball test on the seal portion at 5°C. The dropping ball test is performed to confirm whether the primary seal portion of a bottom sealed bag tears under the weight of raw meat when the user of bottom sealed bag vigorously drops 5 kg of raw meat into the bottom sealed bag at a location with a temperature of around 5°C at which raw meat is inserted.

Hereinafter, procedures (1) to (6) for a dropping ball test on a seal portion at 5°C are specifically described.
(1) First, ten bottom sealed bags for testing, prepared by using a heat-shrinkable multilayer film before shrinkage, are stored for 24 hours in a refrigerated room at 5°C.
(2) Next, the opening portion of a bottom sealed bag is oriented upward in the 5°C refrigerated room, and the bottom sealed bag is suspended and fixed so that a center portion of the primary seal portion is positioned at a height of 30 cm from the floor of the refrigerated room.
(3) A bowling ball having a weight of 5.5 kg is naturally dropped onto the primary seal portion from a height of 100 cm from the floor of the refrigerated room (70 cm from the center portion of the primary seal portion).
(4) In a case where the primary seal tears, the bag is indicated as "seal tearing is present". Next, in a case where the primary seal portion does not tear, the test is continued, and the bowling ball is dropped again onto the primary seal portion. In a case where the primary seal portion does not tear even when this is repeated five times, the bag is indicated as having "no seal tearing".
(5) When "seal tearing is present" or "no seal tearing" is determined, dropping of the bowling ball into the bottom sealed bag is stopped, the bag is replaced with another bottom sealed bag, and procedures (2) to (4) are performed. The procedures (2) to (4) are performed on each of the ten bottom sealed bags for testing in this manner.
(6) In a case where the number of bags with seal tearing is three out of ten or less, it can be determined that the heat-shrinkable multilayer film before shrinkage excels in cold-resistant seal strength. In a case where the number of bags with seal tearing is two or less, the heat-shrinkable multilayer film exhibits even better cold-resistant seal strength, and in a case where the number of bags with seal tearing is one or less, the heat-shrinkable multilayer film excels even further in cold-resistant seal strength.

According to a shrinkage heat-shrinkable multilayer film before shrinkage of the present embodiment having a layer structure that contains in each layer, for example, in order from the outside to the inside, VLDPE/EVA/EMA/PVDC/EMA/EVA/14 wt.% EVA, seal tearing does not occur in even one out of ten bags.

On the other hand, in the case of a shrinkage film before shrinkage other than a film according to the present embodiment, with a layer structure that contains in each layer respectively, for example, in order from the outside to the inside, linear very low density polyethylene (SSC-VLDPE)/EVA-1 (EVA to which an organic-based lubricating material is added in advance)/ethylene-ethyl acrylate copolymer (EEA)/vinylidene chloride-based resin (PVDC)/EEA/EVA-2 (EVA to which a lubricating material is not added)/IO (ionomer resin), seal tearing occurs in seven out of ten bags.

The above results show that the shrinkage heat-shrinkable multilayer film before shrinkage according to the present embodiment clearly excels in cold-resistant seal strength compared to other films before shrinkage.

The heat-shrinkable multilayer film according to the present embodiment need only include an inner surface layer that contacts the filling, and a barrier layer, but preferably include at least three layers including the inner surface layer, the barrier layer, and an intermediate layer between the inner surface layer and the barrier layer. Furthermore, as necessary, the heat-shrinkable multilayer film may also include layers such as an outer layer that contacts the outer side of the barrier layer, an outermost layer located at the outermost side of the heat-shrinkable multilayer film, and an adhesive layer for adhering each of the layers. Including at least three layers, namely the inner surface layer, the barrier layer, and the intermediate layer provides an effect of being suitable as a packaging material.

Furthermore, the thickness of the heat-shrinkable multilayer film differs depending on the film type, but ordinarily is from 5 µm to 300 µm, and preferably from 20 µm to 150 µm. Moreover, for cases in which a film is formed with multiple layers of three or more, the thickness of each layer is preferably from 0.1 µm to 200 µm, and more preferably from 0.5 µm to 100 µm. Hereinafter, each layer configuring the heat-shrinkable multilayer film of the present embodiment is described in detail.

### Inner surface layer

The inner surface layer contained in the heat-shrinkable multilayer film according to the present embodiment is a layer that contacts the filling.

The inner surface layer contains an ethylene-vinyl acetate copolymer (EVA), which is a copolymer having a structural unit derived from ethylene, and a structural unit derived from vinyl acetate (hereinafter, referred to as a vinyl acetate monomer unit). The content of the vinyl acetate monomer unit in the EVA is from 7 wt.% to 14 wt.%, preferably not less than 8 wt.% and 14 wt.%, and more preferably from 10 wt.% to 14 wt.%. The area shrinkage rate is sufficiently increased by setting the content of the vinyl acetate monomer unit to 7 wt.% or greater, and thereby extrusion can be performed when manufacturing the heat-shrinkable multilayer film. Furthermore, the seal strength of the primary seal portion in hot water is made sufficiently high by setting the content of the vinyl acetate monomer unit to 14 wt.% or less, and thereby there is no concern of the primary seal portion peeling even at high temperatures.

### Intermediate layer

The intermediate layer is a layer between the inner surface layer and the barrier layer, and is adjacent to the inner surface layer that contacts the filling. The intermediate layer may be a single layer structure, or may be a multilayer structure.

The resin constituting the intermediate layer is not particularly limited as long as it is an ordinary resin, and examples include single site catalyst-based linear low density polyethylene (SSC-LLDPE), SSC-VLDPE, ethylene-a olefin copolymers (excluding copolymers applicable to the above-described SSC-LLDPE and SSC-VLDPE), EVA, EAA, ethylene-methyl acrylate copolymers (EMA), ethylene-acrylate copolymers, ethylene-methacrylic acid copolymers (EMAA), ethylene-methacrylate copolymers, IO, and ethylene-methacrylic acid-acrylate copolymers. Furthermore, from the perspective of the intermediate layer being a soft resin that can ensure a high area shrinkage rate at high temperatures, and not having much of an effect on the heat-shrinkable multilayer film, the resin is preferably an EVA, IO, EMAA, or EMA and the like, and more preferably an EVA and EMA and the like. These resins constituting the intermediate layer can each be used independently, or two or more types can be blended and used.

The thickness of the intermediate layer is preferably not greater than 1.4 times the thickness of the inner surface layer, more preferably not greater than 1.2 times, and even more preferably not greater than 1.0 times. The balance between the intermediate layer and the inner surface layer is an important factor with regard to the stretchability of the heat-shrinkable multilayer film that includes the inner surface layer, the intermediate layer, and the barrier layer. The intermediate layer generally contains a large amount of soft resin, and thus when the ratio of the intermediate layer increases, stretching advances, and the inflation bubble is made unstable. Therefore, moderate stretching can be achieved and production can be facilitated by setting the thickness of the intermediate layer to not more than 1.4 times the thickness of the inner surface layer. In other words, an effect of stabilizing the inflation bubble during stretching is provided.

### Barrier layer

In the heat-shrinkable multilayer film, the barrier layer has a function of a gas barrier property.

In the present embodiment, the barrier layer may be a single layer structure or may be a multilayer structure, and at least one barrier layer need only be a vinylidene chloride-based resin (PVDC). PVDC is generally a copolymer of from 65 wt.% to 95 wt.% of vinylidene chloride, and from 5 wt.% to 35 wt.% of at least one type of unsaturated monomer that is copolymerizable with vinylidene chloride. Examples of the copolymerizable unsaturated monomer include vinyl chloride, methyl (meth)acrylate, and other alkyl (meth)acrylates. As necessary, EVA and other polyolefin-based resins, plasticizers, stabilizers, and the like may be added to the PVDC.

Besides PVDC, other examples of the barrier layer include EVOH and polyamide-based resins. Of these, PVDC is particularly preferable from the perspective of being capable of imparting a high area shrinkage rate at high temperatures.

The thickness of the barrier layer is, for example, preferably from 1 µm to 20 µm, more preferably from 3 µm to 15 µm, and even more preferably from 4 µm to 10 µm. When the thickness is within the above-described preferable range, the barrier layer that contains highly rigid PVDC becomes one having sufficient thickness, and therefore the maximum point strength and the maximum point energy of the primary seal portion that has naturally shrunk in 80°C hot water are sufficiently increased. That is, sufficient seal strength such that the primary seal portion of the heat-shrinkable multilayer film does not peel can be obtained.

### Other layers

The heat-shrinkable multilayer film according to the present embodiment may further include other layers in addition to the inner surface layer, the intermediate layer, and the barrier layer. Examples of other layers include an outer layer adjacent to the outer side of the barrier layer, an outermost layer adjacent to the outer side of the outer layer, and an adhesive layer for adhering each of the layers. Note that the adhesive layer can be provided, as appropriate, between two layers.

The resins constituting the other layers are not particularly limited as long as they are general resins, and examples include very low density polyethylene (VLDPE), low density polyethylene (LLDPE), high density polyethylene, SSC-LLDPE, polypropylene and other such polyolefins; nylon 6, nylon 66, nylon 46, nylon 6-66, nylon MXD, nylon 6I6T (where I represents isophthalic acid, and T represents terephthalic acid), and other polyamides; polyethylene terephthalate, copolymerized polyethylene terephthalate, which is a copolymer of isophthalic acid and ethylene terephthalate, and other polyesters; ethylene-methyl acrylate copolymers; PVDC; EVOH; EVA; and ionomers.

Furthermore, the adhesive layer, which can be provided as appropriate, can also be used, for example, between the barrier layer containing PVDC and the like and another resin layer, and between polyolefin-based resin layers, and may be further provided between the intermediate layer and the barrier layer. Examples of the resin that forms the adhesive layer include ethylene-acrylate copolymers.

Note that the layers configuring the heat-shrinkable multilayer film may also contain components in addition to the resin. Examples of components besides resin include various types of additives, including, for example, lubricants, antifogging agents, antioxidants, UV absorbers, photostabilizers, antistatic agents, anti-blocking agents, dyes, and pigments.

The layer configuration of the heat-shrinkable multilayer film according to the present embodiment is not particularly limited as long as the inner surface layer contains EVA, the barrier layer contains PVDC, and the content of vinyl-acetate monomer units in the EVA is from 7 wt.% to 14 wt.%. When described in order from the layer configuring the outer surface to the layer (inner surface layer) contacting the filling such as meat, examples include a heat-shrinkable multilayer film having a layer configuration that contains, in respective layers, VLDPE/EVA/ethylene-methyl acrylate copolymer (EMA)/PVDC/EVA; a heat-shrinkable multilayer film having a layer configuration that contains, in respective layers, VLDPE/EVA/EMA/PVDC/EMA/EVA/EVA; a heat-shrinkable multilayer film having a layer configuration that contains, in respective layers, EVA/PVDC/EVA; and a heat-shrinkable multilayer film having a layer configuration that contains, in each layer, nylon/EVA/PVDC/EVA.

### Filling

The filling is the content that is packaged in the heat-shrinkable multilayer film according to the present embodiment. In the present embodiment, examples of the filling include livestock meat and other meat, and more specific examples include beef, pork, lamb, poultry (for example, chicken, turkey and duck), and other meats.

The shape of the respective meats may be any shape, and for example, in the case of beef, pork or lamb, examples of the shape include cuts (5 kg to 15 kg slabs of meat cut from dressed carcasses), blocks (slabs of meat weighing less than 5 kg and cut from dressed carcasses), slices, and minced meat, and in the case of poultry, examples of the shape include whole birds (with the head, feathers and internal organs removed), blocks, slices, and minced meat.

### Method for manufacturing heat-shrinkable multilayer film

The heat-shrinkable multilayer film according to the present embodiment is manufactured by melt extruding, with a plurality of extruders, each of a plurality of resins for forming each layer, subsequently introducing the melted resin into an annular die and the like and coextruding, and then stretching by a known method.

The temperature for melt extrusion is not particularly limited and can be set to an optional temperature as long as the temperature is at or above the temperature at which the resins contained in each layer melt below the temperature at which the resins thermally degrade. However, for example, in the case of EVA for forming the inner surface layer, a temperature from 100°C to 200°C is preferable, and from 110°C to 185°C is more preferable. In the case of a resin for forming the intermediate layer, a temperature from 100°C to 195°C is preferable, and from 110°C to 185°C is more preferable. In the case of a resin for forming the barrier layer, a temperature from 130°C to 175°C is preferable, and from 140°C to 165°C is more preferable.

The temperature for coextrusion with the annular die is preferably from 155°C to 190°C, and more preferably from 165°C to 180°C.

The annular body obtained by coextrusion is cooled in a water bath. The cooling temperature is at or below the melting point of the resin constituting each layer, and the cooling temperature of the PVDC constituting the barrier layer is favorably a temperature at which crystallization can be suppressed, and, for example, a temperature from 3°C to 20°C is preferable, and from 5°C to 15°C is more preferable.

Furthermore, after the annular body has been cooled in a water bath, the annular body may be irradiated with radiation by a known method before or after stretching. Through this type of form, the resins contained in each layer are crosslinked, and thereby the stretchability, heat resistance, and mechanical strength and the like can be improved in comparison to a product that has not been irradiated.

As the radiation, known radiation such as α-rays, β-rays, an electron beam, γ-rays and X-rays can be used, but from the perspective of the crosslinking effect before and after irradiation, an electron beam and γ-rays are preferable, and of these, an electron beam is more preferable from perspectives such as the high levels of operability and production capacity when manufacturing the heat-shrinkable multilayer film. The radiation emission conditions can be set, as appropriate, according to the targeted application, and as one example, in the case of an electron beam, the acceleration voltage is preferably in a range from 150 to 500 kiloelectron volts (hereinafter, described as "keV"), the irradiation dose is preferably in a range from 10 to 200 kilograys (hereinafter, described as "kGy"), and in the case of γ-rays, the dosage rate is preferably in a range from 0.05 to 3 kGy/hour.

Furthermore, the annular body after cooling or the annular body after electron beam irradiation is heated, and then stretched while being cooled.

Heating is performed, for example, by passing the annular body through hot water, followed by stretching. From the perspective of stretchability, the reheating temperature is preferably from 85°C to 89°C, and more preferably from 85°C to 87°C.

The tubular body that has been stretched through heating and has a prescribed size is cooled to stabilize the inflation bubble. The cooling temperature is preferably from 6°C to 14°C, and more preferably from 8°C to 12°C.

In the stretching step, as the stretching method, an inflation method of stretching out a tubular body in a vertical direction while inserting a liquid into the tubular body is used. Manufacturing through uniaxial stretching or biaxial stretching is preferable.

The area shrinkage rate of the heat-shrinkable multilayer film can be set to the above-described preferable range by suitably carrying out uniaxial or biaxial stretching. In addition, when biaxial stretching is performed, ordinarily the molecules are aligned, and therefore biaxial stretching is preferable from the perspectives of transparency, barrier performance, and strength.

The stretching ratio is not particularly limited, but the stretching ratio in the machine direction (MD) is preferably from 2.5 to 4.0 times, and more preferably from 2.7 to 3.8 times. In addition, the stretching ratio in the transverse direction (TD) is preferably from 2.6 to 3.8 times, and more preferably from 2.8 to 3.6 times.

Note that ordinarily, the stretched heat-shrinkable multilayer film shrinks when subjected to a quantity of heat exceeding the temperature that was applied during stretching. The shrinkage rate of the heat-shrinkable multilayer film can be adjusted, as appropriate, according to not only the materials configuring the heat-shrinkable multilayer film, but also the manufacturing conditions such as the stretching ratio.

### Summary

The heat-shrinkable multilayer film according to an embodiment of the present invention includes an inner surface layer that contacts a filling, and a barrier layer; the inner surface layer contains an ethylene-vinyl acetate copolymer; the barrier layer contains a vinylidene chloride-based resin; and the content of vinyl-acetate monomer units in the ethylene-vinyl acetate copolymer is from 7 wt.% to 14 wt.%.

In addition, the thickness of the barrier layer in the heat-shrinkable multilayer film according to an embodiment of the present invention is preferably from 1 µm to 20 µm.

In addition, the heat-shrinkable multilayer film according to an embodiment of the present invention includes an intermediate layer between the inner surface layer and the barrier layer, and the thickness of the intermediate layer is preferably not greater than 1.4 times the thickness of the inner surface layer.

Furthermore, with respect to the heat-shrinkable multilayer film according to an embodiment of the present invention, the area shrinkage rate when immersing heat-shrinkable multilayer film for 10 seconds in 80°C hot water is preferably from 60% to 90%.

In the heat-shrinkable multilayer film according to an embodiment of the present invention, the haze of the heat-shrinkable multilayer film after having been immersed in 80°C hot water and shrunk is preferably 35% or less.

Embodiments of the present invention are described in greater detail through the presentation of examples below. Of course, the present invention is not limited to the following examples, and various aspects with regard to the details are of course possible. The present invention is also not limited to the above-described embodiments, and various modifications are possible within the scope indicated in the claims. Embodiments obtained by appropriately combining each of the disclosed technical means are also included in the technical scope of the present invention. Furthermore, all of the literature described in the present specification are cited as references.

### Examples

The resin materials of each layer of the heat-shrinkable multilayer film used in the examples and comparative examples of the present invention are presented below.

### Resin materials

### (1) EVA

The EVA samples used to form the inner surface layer in the examples and comparative examples are shown in Table 1 below.

Note that the vinyl acetate content shown in Table 1 indicates the content of the vinyl-acetate monomer units in the EVA.

**[Table 1]**

| Samples | Vinyl acetate content (wt.%) | Trade name | Name of manufacturer |
|---|---|---|---|
| 19 wt.% EVA | 19 | Evaflex V430RC | Dupont-Mitsui Polychemicals Co., Ltd. |
| 16 wt.% EVA | 16 | Evaflex V5714C | Dupont-Mitsui Polychemicals Co., Ltd. |
| 15 wt.% EVA | 15 | Ultrasen 626 | Tosoh Corporation |
| 14 wt.% EVA | 14 | Evaflex P1403 | Dupont-Mitsui Polychemicals Co., Ltd. |
| 10 wt.% EVA | 10 | Ultrasen 540 | Tosoh Corporation |
| 8 wt.% EVA | 8 | Ultrasen 520F | Tosoh Corporation |
| 6 wt.% EVA | 6 | Ultrasen 510 | Tosoh Corporation |

### (2) VLDPE

A VLDPE of the trade name Moretec V0398CN available from Prime Polymer Co., Ltd. was used in the outermost layer.

### (3) PVDC

A PVDC resin Krehalon FB-12 available from Kureha Corporation was used in the barrier layer.

### (4) EMA

A resin of EMA obtained by mixing Elvaloy 1218AC (density: 0.94 g/cm³, melting point: 94°C) and Elvaloy 1209AC (density: 0.927 g/cm³, melting point: 101°C) available from Dupont-Mitsui Polychemicals Co., Ltd. at a weight ratio of 33:67 was used for the adhesive layer.

### (5) Other EVA

Other EVAs (hereinafter, described merely as "EVA") of Polene N8038F and Polene N8036 available from TPI Polene Public Co., Ltd. were used for the outer layer and intermediate layer.

### Example 1

In Example 1, the 14 wt.% EVA of Table 1 was used for the inner surface layer.

The configuration of the laminate was a layer configuration including respectively in each layer, in order from the outside to the inside with the thickness (unit: µm) indicated in parentheses, VLDPE (2.0)/EVA (24)/EMA (1.5)/PVDC (7)/EMA (1.5)/EVA (9.5)/14 wt.% EVA (9.5). Each resin was melt extruded with a plurality of extruders so as to form a heat-shrinkable multilayer film of the above-mentioned layer configuration. The melted and extruded resins were introduced into an annular die, melted and joined so as to form the above-described layer configuration, and coextruded. The melted annular body having a temperature of 180°C and flowing out from the die exit was cooled to 10°C in a water bath, and a flat annular body having a flat width of approximately 137 mm was formed. Then, the obtained flat annular body was irradiated with an electron beam from the outer side of the flat annular body inside an electron beam irradiation device having an acceleration voltage of 275 keV, an irradiation dose of 100 kGy was applied, and the VLDPE of the outermost layer and the EVA of the inside thereof were crosslinked. This flat annular body was heated while being passed through hot water having a temperature of approximately 86°C, after which a tubular body was formed. While this tubular body was cooled using a 10°C air ring, the tubular body was biaxially stretching simultaneously at a stretching ratio of 3.5 times in the machine direction (MD) and 3.1 times in the transverse direction (TD) by the inflation method, and an annular biaxially stretched film (heat-shrinkable multilayer film) having a flat width of approximately 424 mm was obtained.

The obtained heat-shrinkable multilayer film was cut to a fold width of 424 mm and a length of 800 mm using a bag-forming machine, and a bottom sealed bag was thereby produced.

### Example 2

A heat-shrinkable multilayer film was obtained in the same manner as Example 1 except that 13 wt.% EVA was used for the inner surface layer in place of the 14 wt.% EVA of Table 1.

Here, 13 wt.% EVA is an EVA that is obtained by mixing Ultrasen 630 (available from Tosoh Corporation) and the 10 wt.% EVA (Ultrasen 540 (available from Tosoh Corporation)) described in Table 1 at a weight ratio of 60:40 so that the content of the vinyl-acetate monomer units in the EVA become 13 wt.%.

### Example 3

A heat-shrinkable multilayer film was obtained in the same manner as Example 1 except that 12 wt.% EVA was used for the inner surface layer in place of the 14 wt.% EVA of Table 1.

Here, 12 wt.% EVA is an EVA that is obtained by mixing the 14 wt.% EVA with 10 wt.% EVA described in Table 1 at a weight ratio of 50:50 so that the content of the vinyl-acetate monomer units in the EVA become 12 wt.%.

### Example 4

A heat-shrinkable multilayer film was obtained in the same manner as Example 1 except that 10 wt.% EVA was used for the inner surface layer in place of the 14 wt.% EVA of Table 1.

### Example 5

A heat-shrinkable multilayer film was obtained in the same manner as Example 1 except that 8 wt.% EVA was used for the inner surface layer in place of the 14 wt.% EVA of Table 1.

### Comparative Example 1

A heat-shrinkable multilayer film was obtained in the same manner as Example 1 except that 15 wt.% EVA was used for the inner surface layer in place of the 14 wt.% EVA of Table 1.

### Comparative Example 2

A heat-shrinkable multilayer film was obtained in the same manner as Example 1 except that 16 wt.% EVA was used for the inner surface layer in place of the 14 wt.% EVA of Table 1.

### Comparative Example 3

A heat-shrinkable multilayer film was obtained in the same manner as Example 1 except that 5 wt.% EVA was used for the inner surface layer in place of the 14 wt.% EVA of Table 1.

### Comparative Example 4

A heat-shrinkable multilayer film was obtained in the same manner as Example 1 except that 19 wt.% EVA was used for the inner surface layer in place of the 14 wt.% EVA of Table 1.

### Evaluation of the various characteristics of heat-shrinkable multilayer film

The methods for evaluating the various characteristics of the heat-shrinkable multilayer films produced in Examples 1 to 5 and Comparative Examples 1 to 4 and the evaluation results are presented below.

### Evaluation of seal strength of primary seal portion in 80°C hot water

A primary seal portion of a heat-shrinkable multilayer film formed into a bag was cut to a width of 15 mm and a length of 100 mm, fixed in chucks for measurements, and then allowed to freely shrink for 10 seconds in 80°C hot water, after which the primary seal portion was immediately stretched in the hot water, and the seal strength of the primary seal portion in 80°C hot water was measured. The measuring instrument and measurement conditions were as follows.
(Measuring Instrument) Tensilon RTG-1210 available from Orientec Co., Ltd.
(Measurement Conditions) Distance between chucks: 20 mm; tensile speed: 300 mm/min
As shown in Table 2, the measured seal strength of the primary seal portion was determined as a maximum point strength and a maximum point energy.

The maximum point strength was evaluated based on the following criteria. The results are shown in Table 2.
Pass: Maximum point strength is 2.0 (N) or greater.
Fail: Maximum point strength is less than 2.0 (N).

In addition, the maximum point energy was evaluated based on the following criteria.
Pass: Maximum point energy is 0.015 (J) or greater.
Fail: Maximum point energy is less than 0.015 (J).

Note that the values for the maximum point strength and the maximum point energy are described as numeric values in parentheses in Table 2.

### Evaluation of haze of heat-shrinkable multilayer film after shrinkage

After the heat-shrinkable multilayer film was immersed for 10 seconds in hot water adjusted to a temperature of 80°C, the film was removed, and then immediately cooled in water at room temperature.

The cloudiness (haze unit: %) of the film after shrinkage was measured using a haze meter (Haze Meter NDH2000 available from Nippon Denshoku Industries Co., Ltd.) in conformance with the method described in JIS K 7136:2000 "Plastics: Determination of Haze for Transparent Materials".

The haze of the heat-shrinkable multilayer film after shrinkage was evaluated in accordance with the following criteria. The results are shown in Table 2.
Pass: Haze is 35% or less.
Fail: Haze is greater than 35%.

Note that the haze values of the heat-shrinkable multilayer films after shrinkage are described as numeric values in parentheses in Table 2.

### Evaluation of area shrinkage rate

The area shrinkage rate of the heat-shrinkable multilayer film was measured by the following method.

A heat-shrinkable multilayer film that has been cut to a dimension of 100 mm (machine direction: MD) × 100 mm (transverse direction: TD) was immersed for 10 seconds in 80°C hot water, and then removed and cooled in water at room temperature.

The MD length and TD length of the heat-shrinkable multilayer film after immersion and cooling were measured with a ruler, the MD shrinkage rate and the TD shrinkage rate were each determined from the MD length and TD length prior to immersion, and based thereon, the area shrinkage rate was calculated.

The area shrinkage rate was determined by the equation [1 - (MD length after shrinkage × TD length after shrinkage)/(MD length before shrinkage × TD length before shrinkage)] × 100.

Note that the area shrinkage rate was evaluated based on the following criteria. The results are shown in Table 2.
Pass: Area shrinkage rate is from 60% to 90%.
Fail: Area shrinkage rate is less than 60% or greater than 90%.

Note that the values of the area shrinkage rate are described in Table 2 as numeric values in parentheses.

### Evaluation of seal strength of primary seal portion through filling test

Packaging bag-shaped heat-shrinkable multilayer films were each filled with approximately 5 kg of beef leg meat to form a packaging body, the packaging body was then vacuum sealed to prepare a sample for a filling test. The prepared filling test sample was immersed for 3 seconds in a hot water tank heated to 80°C. Then, the sample was immersed for 10 seconds in a 2°C cold water tank, after which the seal portion was checked for the presence of any tearing. Three samples were prepared for each of the examples and comparative examples, and the test was performed three times for each example and comparative example.

The seal strength of the primary seal portion was evaluated through the filling test based on the following criteria. The results are shown in Table 2.
Pass: None of the bags tore at the primary seal portion.
Fail: One or more of the bags tore at the primary seal portion.

### External appearance evaluation of packaging body

The external appearance of the heat shrunk packaging bodies obtained in the filling tests was evaluated based on the following criteria. The results are shown in Table 2.
Pass: The heat-shrinkable multilayer film closely contacted the beef leg meat, and there was no slack in the heat-shrinkable multilayer film.
Marginal: At portions where the beef leg meat was indented, the heat-shrinkable multilayer film wrinkled and exhibited slack.
- : The packaging bag tore at the seal portion and could not be evaluated.

### Evaluation of productivity of heat-shrinkable multilayer film

The productivity of the heat-shrinkable multilayer film was evaluated in accordance with the following criteria. The results are shown in Table 2.
Pass: Can be stably extruded, stretched, and wound.
Marginal: When the tubular body is heated for stretching, the inner surface layers of the tubular body fuse, and cannot be skillfully stretched.
Fail: The inflation bubble is unstable, and cannot be skillfully stretched.

**[Table 2-1]**

| Examples/ Comparative Examples | EVA of inner surface layer | Seal strength of primary seal portion in 80°C hot water | | Filling test |
|---|---|---|---|---|
| | | Maximum point strength (N) | Maximum point energy (J) | |
| Example 1 | 14 wt.% EVA | Pass (2.1) | Pass (0.018) | Pass |
| Example 2 | 13 wt.% EVA | Pass (2.2) | Pass (0.020) | Pass |
| Example 3 | 12 wt.% EVA | Pass (2.4) | Pass (0.021) | Pass |
| Example 4 | 10 wt.% EVA | Pass (2.5) | Pass (0.030) | Pass |
| Example 5 | 8 wt.% EVA | Pass (2.6) | Pass (0.035) | Pass |
| Comparative Example 1 | 15 wt.% EVA | Fail (1.9) | Fail (0.012) | Fail |
| Comparative Example 2 | 16 wt.% EVA | Fail (1.7) | Fail (0.009) | Fail |
| Comparative Example 3 | 5 wt.% EVA | Pass (2.7) | Pass (0.039) | Pass |
| Comparative Example 4 | 19 wt.% EVA | Fail (1.2) | Fail (0.005) | Fail |

**[Table 2-2]**

| Examples/ Comparative Examples | Haze after shrinkage at 80°C (%) | Area shrinkage rate (%) | External appearance of packaging body | Film productivity |
|---|---|---|---|---|
| Example 1 | Pass (27.1) | Pass (68.7) | Pass | Pass |
| Example 2 | Pass (26.5) | Pass (69.2) | Pass | Pass |
| Example 3 | Pass (25.7) | Pass (66.9) | Pass | Pass |
| Example 4 | Pass (24.3) | Pass (65.8) | Pass | Pass |
| Example 5 | Pass (23.5) | Pass (62.8) | Pass | Pass |
| Comparative Example 1 | Fail (35.9) | Pass (70.5) | - | Pass |
| Comparative Example 2 | Fail (40.7) | Pass (71.5) | - | Marginal |
| Comparative Example 3 | Pass (20.2) | Fail (58.5) | Marginal | Fail |
| Comparative Example 4 | Fail (43.7) | Pass (79.8) | Pass | Marginal |

### Industrial Applicability

The present invention can be used as a film for use as a vacuum packaging material for contents such as meat to be consumed.

### Reference Signs List

1, 11 Packaging body
2 Raw meat (filling)
3, 13 Selvage portion
12 Processed meat

## Claims

1. A heat-shrinkable multilayer film comprising:
an inner surface layer that contacts a filling;
a barrier layer;
an intermediate layer between the inner surface layer and the barrier layer;
a thickness of the intermediate layer being not more than 1.4 times a thickness of the inner surface layer;
the inner surface layer comprising an ethylene-vinyl acetate copolymer;
the barrier layer comprising a vinylidene chloride-based resin; and
the content of vinyl-acetate monomer units in the ethylene-vinyl acetate copolymer being from 7 wt.% to 14 wt.%.

2. The heat-shrinkable multilayer film according to claim 1, wherein a thickness of the barrier layer is from 1 µm to 20 µm.

3. The heat-shrinkable multilayer film according to any one of claims 1 or 2, wherein an area shrinkage rate when immersing the heat-shrinkable multilayer film cut to a dimension of 100 mm (machine direction: MD) × 100 mm (transverse direction: TD) for 10 seconds in 80°C hot water, removing it and cooling it in water at room temperature, is from 60% to 90%;
the area shrinkage rate being determined by the equation [1 - (MD length after shrinkage × TD length after shrinkage)/(MD length before shrinkage × TD length before shrinkage)] × 100.

4. The heat-shrinkable multilayer film according to any one of claims 1 to 3, wherein a haze of the heat-shrinkable multilayer film after being immersed in 80°C hot water and shrunk is 35% or less, wherein the haze of the film after shrinkage is measured using a haze meter (Haze Meter NDH2000 available from Nippon Denshoku Industries Co., Ltd.) in conformance with the method described in JIS K 7136:2000 "Plastics: Determination of Haze for Transparent Materials".

## Patentansprüche

1. Wärmeschrumpfbare Mehrschichtfolie, umfassend:
eine innere Oberflächenschicht, die mit einer Füllung in Kontakt ist;
eine Barriereschicht;
eine Zwischenschicht zwischen der inneren Oberflächenschicht und der Barriereschicht;
wobei eine Dicke der Zwischenschicht nicht mehr als das 1,4-Fache einer Dicke der inneren Oberflächenschicht beträgt;
wobei die innere Oberflächenschicht ein Ethylen-Vinylacetat-Copolymer umfasst;
wobei die Barriereschicht ein Harz auf Vinylidenchloridbasis umfasst; und
wobei der Gehalt an Vinylacetatmonomereinheiten in dem Ethylen-Vinylacetat-Copolymer von 7 Gew.-% bis 14 Gew.-% reicht.

2. Wärmeschrumpfbare Mehrschichtfolie nach Anspruch 1, wobei eine Dicke der Barriereschicht von 1 µm bis 20 µm reicht.

3. Wärmeschrumpfbare Mehrschichtfolie nach einem der Ansprüche 1 oder 2, wobei eine Flächenschrumpfungsrate beim Eintauchen der wärmeschrumpfbaren Folie, geschnitten auf eine Abmessung von 100 mm (Maschinenrichtung: MD) x 100 mm (Querrichtung: TD), für 10 Sekunden in 80 °C warmes Wasser, Entfernen dessen und Kühlen in Wasser auf Raumtemperatur, 60 % bis 90 % beträgt;
wobei die Flächenschrumpfungsrate durch die Gleichung [1 - (MD Länge nach Schrumpfung x TD Länge nach Schrumpfung)/(MD Länge vor Schrumpfung x TD Länge vor Schrumpfung)] x 100 bestimmt wird.

4. Wärmeschrumpfbare Mehrschichtfolie nach einem der Ansprüche 1 bis 3, wobei eine Trübung der wärmeschrumpfbaren Mehrschichtfolie nach Eintauchen in 80 °C heißes Wasser und Schrumpfen 35 % oder weniger beträgt, wobei die Trübung des Films nach der Schrumpfung unter Verwendung eines Trübungsmessers (Haze Meter NDH2000, erhältlich von Nippon Denshoku Industries Co., Ltd.) in Übereinstimmung mit dem in JIS K 7136:2000 "Plastics: Determination of Haze for Transparent Materials" beschriebenen Verfahren gemessen wird.

## Revendications

1. Film multicouche thermorétractable comprenant :
une couche superficielle interne qui vient en contact avec un remplissage ;
une couche barrière ;
une couche intermédiaire entre la couche superficielle interne et la couche barrière ;
une épaisseur de la couche intermédiaire ne valant pas plus de 1,4 fois une épaisseur de la couche superficielle interne ;
la couche superficielle interne comprenant un copolymère d'éthylène-acétate vinyle ;
la couche barrière comprenant une résine à base de chlorure de vinylidène ; et
la teneur en motifs monomères acétate de vinyle dans le copolymère d'éthylène-acétate vinyle allant de 7 % en poids à 14 % en poids.

2. Film multicouche thermorétractable selon la revendication 1, dans lequel une épaisseur de la couche barrière va de 1 µm à 20 µm.

3. Film multicouche thermorétractable selon l'une quelconque des revendications 1 ou 2, dans lequel un taux de retrait surfacique lors de l'immersion du film multicouche thermorétractable coupé à une dimension de 100 mm (direction machine : MD) x 100 mm (direction transversale : TD) pendant 10 secondes dans de l'eau chaude à 80 °C, son retrait et son refroidissement dans de l'eau à la température ambiante, va de 60 % à 90 % ;
le taux de retrait surfacique étant déterminé par l'équation [1 - (longueur MD après retrait x longueur TD après retrait)/(longueur MD avant retrait x longueur TD avant retrait)] x 100.

4. Film multicouche thermorétractable selon l'une quelconque des revendications 1 à 3, dans lequel un trouble du film multicouche thermorétractable après immersion dans de l'eau chaude à 80 °C et retrait vaut 35 % ou moins, dans lequel le trouble du film après retrait est mesuré en utilisant un néphélomètre (Haze Meter NDH2000 disponible auprès de Nippon Denshoku Industries Co., Ltd.) conformément au procédé décrit dans JIS K 7136:2000 « Plastics: Determination of Haze for Transparent Materials » (Matières plastiques : détermination de trouble pour des matériaux transparents).
